# EUROPÄISCHE PATENTANMELDUNG

(11) **EP 1 566 292 A1**
(43) Veröffentlichungstag der Anmeldung: **24.08.2005**
(21) Anmeldenummer: 04106586.3
(22) Anmeldetag: 15.12.2004
(51) Int. Cl.: B60C 11/11, B60C 11/13, B60C 11/117

(54) **Fahrzeugluftreifen**

(30) Priorität: 19.02.2004 DE 102004008034
(71) Anmelder: Continental Aktiengesellschaft, 30165 Hannover (DE)
(72) Erfinder: Lange, Holger, 30449, Hannover (DE); Seng, Matthias, 30499, Hannover (DE); Binder, Axel, 30171, Hannover (DE); Matute-Ibanez, Beatriz, 30419 Hannover (DE); Mundl, Reinhard, 30169, Hannover (DE)

(57) **Zusammenfassung**

Fahrzeugluftreifen mit einem Laufflächenprofil mit von durch Profilrillen seitlich begrenzten Profilblockelementen (24),
wobei die Profilblockelemente (24) nach radial außen durch eine Kontaktfläche (34) zur Herstellung des Reibkontaktes zur Straßenoberfläche und seitlich mit Profilelementflanken (30,31,32,33) bildenden Oberflächen begrenzt sind, die sich jeweils aus dem Rillengrund der begrenzenden Profilrille radial nach außen bis zur Kontaktfläche (34) erstrecken,
wobei,
in wenigstens einer eine Profilelementflanke (30,31,32,33) bildenden Oberfläche ein Feineinschnitt (40,42) ausgebildet ist, der in der die Profilelementflanke bildenden Oberflächen (30,31,32,33) vollständig geschlossen mit Gummimaterial umhüllt ist, so dass in Abhängkeit von in radialer Richtung wirkenden Zug-und/oder Druckspannungen in der die Profilelementflanke (30,31,32,33) bildenden Oberfläche die radiale Erstreckung der Profilelementflanke unter Öffnen und/oder Schließen des Feineinschnitts (40,42) veränderbar ist.

## Beschreibung

Die Erfindung betrifft einen Fahrzeugluftreifen mit einem Laufflächenprofil mit von durch Profilrillen seitlich begrenzten Profilblockelementen, wobei die Profilblockelemente nach radial außen durch eine Kontaktfläche zur Herstellung des Reibkontaktes zur Straßenoberfläche und seitlich mit Profilelementflanken bildenden Oberflächen begrenzt sind, die sich jeweils aus dem Rillengrund der begrenzenden Profilrille radial nach außen bis zur Kontaktfläche erstrecken.

Bei dynamischen Belastungen der Profilblockelemente im Latsch, wie sie beispielsweise beim Beschleunigen oder beim Bremsen auftreten, kommt es in Abhängigkeit von der Belastung zu unterschiedlichen Deformationen der einander in Belastungsrichtung gegenüberliegenden Profilflanken des jeweiligen Profilblockelements. Dies führt zu Deformationen mit unerwünschten Erhebungen und Vertiefungen der nach radial außen zur Herstellung des Reibkontaktes zur Straßenoberfläche ausgebildeten Kontaktfläche des jeweiligen Profilblockelements, wodurch die für die dynamische Krafteinleitung zwischen Straßenoberfläche und der ausgebildeten Kontaktfläche effektiv zur Verfugung stehende Fläche lediglich auf kleine Teilbereiche der ausgebildeten Kontaktfläche zur großen Krafteinleitung und andere Bereiche zur Einleitung - wenn überhaupt - nur geringer Kraftanteile beschränkt wird. Dies beschränkt die bei dynamischen Vorgängen von den Profilelementen übertragbaren Kräfte.

Der Erfindung liegt die Aufgabe zugrunde, bei einem Fahrzeugluftreifen mit einem Laufflächenprofil mit von durch Profilrillen seitlich begrenzten Profilblockelementen, wobei die Profilblockelemente nach radial außen durch eine Kontaktfläche zur Herstellung des Reibkontaktes zur Straßenoberfläche und seitlich mit Profilelementflanken bildenden Oberflächen begrenzt sind, die sich jeweils aus dem Rillengrund der begrenzenden Profilrille radial nach außen bis zur Kontaktfläche erstrecken, zu ermöglichen, dass Kräfte bei dynamischen Vorgängen besser zwischen Profilelement und Straße übertragen werden können.

Die Aufgabe wird erfindungsgemäß durch die Ausbildung eines Fahrzeugluftreifens mit einem Laufflächenprofil mit von durch Profilrillen seitlich begrenzten Profilblockelementen, wobei die Profilblockelemente nach radial außen durch eine Kontaktfläche zur Herstellung des Reibkontaktes zur Straßenoberfläche und seitlich mit Profilelementflanken bildenden Oberflächen begrenzt sind, die sich jeweils aus dem Rillengrund der begrenzenden Profilrille radial nach außen bis zur Kontaktfläche erstrecken, gemäß den Merkmalen von Anspruch 1 gelöst, bei dem in wenigstens einer eine Profilelementflanke bildenden Oberfläche ein Feineinschnitt ausgebildet ist, der in der die Profilelementflanke bildenden Oberflächen vollständig geschlossen mit Gummimaterial umhüllt ist, so dass in Abhängkeit von in radialer Richtung wirkenden Zug-und/oder Druckspannungen in der die Profilelementflanke bildenden Oberfläche die radiale Erstreckung der Profilelementflanke unter Öffnen und/oder Schließen des Feineinschnitts veränderbar ist.

Hierdurch ist in jeweils Abhängigkeit vom gewünschten Einsatz eines Fahrzeugreifens individuell gezielt möglich, dass eine oder mehrere mit Feineinschnitten versehene einzelne Profilelementflanken lastabhängig radial verkürzt oder verlängert werden, so dass hierdurch gezielt den unerwünschten Erhebungen und/oder Vertiefungen der Kontaktfläche des Profilblockelements in dynamischen Fahrvorgängen durch die Verkürzungen bzw. Verlängerungen der mit Feineinschnitt ausgebildeten Profilelementflanke gegenwirkende Vertiefungs- und/oder Erhebungs-effekte überlagert werden können. Hierdurch kann gezielt eine Einebnung der Kontaktfläche im dynamischen Fahrvorgang und somit eine gleichmäßigere Krafteinleitung zwischen Profilblockelement und Straßenoberfläche über einen großen Kontaktflächenbereich des Profilblockelements erzielt werden. Hierdurch ist es möglich, dass bei dynamischen Fahrvorgängen höhere Kräfte gleichmäßiger eingeleitet werden können.

Die Ausbildung gemäß den Merkmalen von Anspruch 2, wobei der Feineinschnitt in einer das Profilelement in Umfangsrichtung des Fahrzeugluftreifens begrenzenden Profilelementflanke ausgebildet ist, ermöglicht es verbessernd gezielt auf die gleichmäßige Einleitung der bei Beschleunigung und Bremsen erforderlichen Kräfte einzuwirken.

Die Ausbildung gemäß den Merkmalen von Anspruch 3, wobei der Feineinschnitt im Betriebszustand des montierten Fahrzeugluftreifens in der in Umlaufrichtung des Fahrzeugluftreifens bei Vorwärtsfahrt des Fahrzeugs vorderen das Profilelement in Umfangsrichtung des Fahrzeugluftreifens begrenzenden Profilelementflanke ausgebildet ist, stellt eine bevorzugte Ausführung der Erfindung dar.

Die Ausbildung gemäß den Merkmalen von Anspruch 4, wobei der Feineinschnitt im Betriebszustand des montierten Fahrzeugluftreifens in der in Umlaufrichtung des Fahrzeugluftreifens bei Vorwärtsfahrt des Fahrzeugs rückwärtigen das Profilelement in Umfangsrichtung des Fahrzeugluftreifens begrenzenden Profilelementflanke ausgebildet ist, stellt eine bevorzugte Ausführung der Erfindung dar.

Die Ausbildung gemäß den Merkmalen von Anspruch 5, wobei der Verlauf der Haupstschnittlichtung des Feineinschnitts in der die Profilelementflanke bildenden Oberfläche mit seiner größten Erstreckungskomponente - insbesondere vollständig - in radialer Richtung ausgerichtet ist, ermöglicht ein Öffnen des Feineinschnitts sowie ein Verkürzen der radialen Erstreckung der Profilelementflanke bei radialer Druckbelastung der Profilelementflanke. In Verbindung mit der Ausbildung gemäß den Merkmalen von Anspruch 3, bei der dieser Feineinschnitt im Betriebszustand des montierten Fahrzeugluftreifens in der in Umlaufrichtung des Fahrzeugluftreifens bei Vorwärtsfahrt des Fahrzeugs rückwärtigen das Profilelement in Umfangsrichtung des Fahrzeugluftreifens begrenzenden Profilelementflanke ausgebildet ist, kann hierdurch eine gezielte Vergleichmäßigung der Krafteinleitung bei Bremsen des Fahrzeugs bei Bewegung in Vorwärtsfahrtrichtung und somit eine verbesserte Bremswirkung erreicht werden. In Verbindung mit der Ausbildung gemäß den Merkmalen von Anspruch 4, bei der dieser Feineinschnitt im Betriebszustand des montierten Fahrzeugluftreifens in der in Umlaufrichtung des Fahrzeugluftreifens bei Vorwärtsfahrt des Fahrzeugs vorderen das Profilelement in Umfangsrichtung des Fahrzeugluftreifens begrenzenden Profilelementflanke ausgebildet ist, kann hierdurch eine gezielte Vergleichmäßigung der Krafteinleitung bei Beschleunigung des Fahrzeugs in Vorwärtsfahrtrichtung und somit eine verbesserte Traktion erreicht werden.

Die Ausbildung gemäß den Merkmalen von Anspruch 6, wobei der Verlauf der Haupstschnittlichtung des Feineinschnitts in der die Profilelementflanke bildenden Oberfläche mit seiner größten Erstreckungskomponente - insbesondere vollständig - senkrecht zur radialen Richtung ausgerichtet ist. ermöglicht ein Öffnen des Feineinschnitts sowie ein Verlängern der radialen Erstreckung der Profilelementflanke bei radialer Zugbelastung der Profilelementflanke. In Verbindung mit der Ausbildung gemäß den Merkmalen von Anspruch 3, bei der dieser Feineinschnitt im Betriebszustand des montierten Fahrzeugluftreifens in der in Umlaufrichtung des Fahrzeugluftreifens bei Vorwärtsfahrt des Fahrzeugs vorderen das Profilelement in Umfangsrichtung des Fahrzeugluftreifens begrenzenden Profilelementflanke ausgebildet ist, kann hierdurch eine gezielte Vergleichmäßigung der Krafteinleitung bei Beschleunigung des Fahrzeugs in Vorwärtsfahrtrichtung und somit eine verbesserte Traktion erreicht werden. In Verbindung mit der Ausbildung gemäß den Merkmalen von Anspruch 4, bei der dieser Feineinschnitt im Betriebszustand des montierten Fahrzeugluftreifens in der in Umlaufrichtung des Fahrzeugluftreifens bei Vorwärtsfahrt des Fahrzeugs rückwärtigen das Profilelement in Umfangsrichtung des Fahrzeugluftreifens begrenzenden Profilelementflanke ausgebildet ist, kann hierdurch eine gezielte Vergleichmäßigung der Krafteinleitung bei Bremsen des Fahrzeugs bei Bewegung in Vorwärtsfahrtrichtung und somit eine verbesserte Bremswirkung erreicht werden.

Die Erfindung wird im Folgenden an Hand der in den Figuren 1 bis 17 dargestellten Ausführungsbeispiele näher erläutert. Hierin zeigen
- Fig. 1:: schematische Querschnittsdarstellung eines Fahrzeugluftreifens längs einer Querschnittsebene, die die Achse des Fahrzeugluftreifens beinhaltet,
- Fig. 2:: Draufsicht auf das Laufflächenprofil gemäß II-II von Fig.1,
- Fig. 3:: Darstellung eines erfindungsgemäßen Profilblockelementes mit Feineinschnitt in einer Profilblockflanke mit einem an der in Drehrichtung bei Vorwärtsfahrt vorderen Profilblockflanke in radialer Richtung ausgebildetem Feineinschnitt gemäß Schnittdarstellung III-III von Fig. 2
- Fig. 4:: Darstellung des Profilblockelements von Fig. 3 in Schnittdarstellung gemäß Schnitt IV-IV von Fig. 2
- Fig. 5:: Profilblockelement von Fig.3 in Darstellung von Fig. 3 unter Einfluss von radialen Druckkräften im Bereich der gezeigten Profilblockflanke
- Fig.6a: Schematische Darstellung eines herkömmlichen Profilblockelementes gemäß Stand der Technik, das beim Bremsen im Kontakt zur Straßenoberfläche steht.
- Fig. 6b: Profilblockelement der Figuren 3 bis 5, das beim Bremsen im Kontakt zur Straßenoberfläche steht
- Fig. 7: eine Ausführung eines Profilblockelements mit an der in Drehrichtung bei Vorwärtsfahrt hinteren Profilblockflanke senkrecht zur Radialen ausgebildetem Feineinschnitt gemäß Schnittdarstellung VII-VII von Fig. 2
- Fig. 8: Profilblockelement von Fig. 7 gemäß Schnittdarstellung VIII-VIII von Fig 2
- Fig. 9.: Profilblockelement von Fig. 7 in Schnittdarstellung IX-IX von Fig. 8
- Fig. 10: Profilblockelement von Fig. 7, das beim Bremsen unter Berührkontakt zur Straßenoberfläche steht
- Fig. 11: Profilblockelement gemäß Fig. 3 mit alternativer Ausbildung des Feineinschnitts
- Fig. 12: Profilblockelement gemäß Fig. 3 mit weiterer alternativer Ausbildung des Feineinschnitts
- Fig. 13: Profilblockelement gemäß Fig. 7 mit alternativer Fachausbildung des Feineinschnitts
- Fig. 14: Profilblockelement gemäß Fig. 7 mit weiterer alternativer Ausbildung des Feineinschnitts
- Fig. 15: Profilblockelement gemäß Fig. 3 mit weiterer alternativer Ausbildung des Feineinschnitts
- Fig.16a bis 16d: Profilblockelemente gemäß Fig. 3 oder Fig. 7 mit unterschiedlichen alternativen Ausbildungen des Feineinschnitts
- Fig. 17a bis 17e: Unterschiedliche Alternativen der Ausbildung der Kontur des Tiefenverlaufs der Feineinschnitte im Innern der Profilblockelemente am Beispiel des Feineinschnitts von Fig. 3

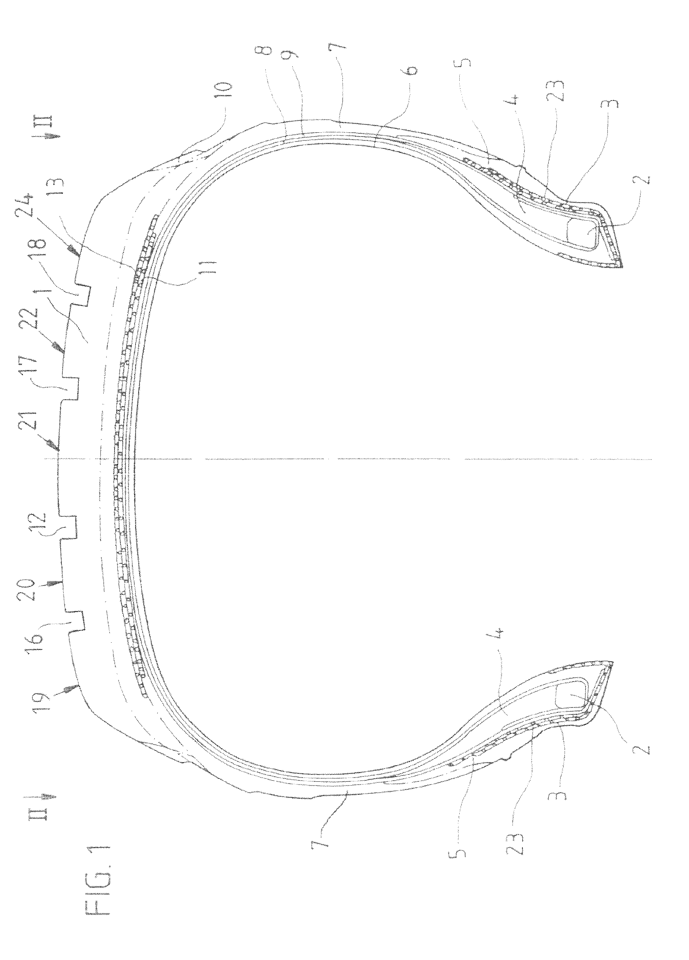

In Fig. 1 ist der Aufbau eines Fahrzeugluftreifens beispielhaft dargestellt, bei dem um einen Kern 2 mit Kemprofil 4 eine erste Karkassenlage 8 bekannter Art außerhalb einer luftundurchlässigen Innenschicht 6 über den rechten Schulterbereich und die Zenitebene zu dem linken Schulterbereich und den linken Kern 2 mit Kemprofil 4 reicht, um den sie in herkömmlicher Weise gelegt ist. Über der ersten Karkassenlage 8 ist in herkömmlicher Weise eine zweite Karkassenlage 9 bekannter Art gelegt, die sich ebenfalls von der in Fig.1 rechts dargestellten Seite des Reifens bis zur links dargestellten Seite erstreckt. In herkömmlicher Weise ist im Kernbereich jeweils über einen Wulststreifen 23 und den Wulstverstärker 3 ein Hornprofil 5 und von diesem ausgehend bis in den Schulterbereich reichend ein Seitenwandstreifen 7 aufgelegt. Über den Umfang des Reifens reichen außerhalb der Karkassenlagen 7 und 8 radialer Bauart angeordnet mehrere Stahlgürtellagen 11 und 13 bekannter Art mit in Kautschuk eingebetteten Stahlkorden. Im Schulterstreifen sind in bekannter Weise zusätzlich Schulterstreifen 10 aufgelegt. Den Abschluss des Reifenaufbaus bildet in bekannter Weise ein profilierter Laufstreifen 1.

In den Figuren ist die axiale Richtung A des Fahrzeugluftreifens mit Pfeildarstellung eingetragen. Die radiale Richtung R des Fahrzeugluftreifens ist ebenfalls mit Pfeildarstellung angegeben, wobei die Pfeilrichtung von radial innen nach radial außen weist. Ebenso ist die Umfangsrichtung U des Fahrzeugluftreifens mit Pfeildarstellung angegeben, wobei die Pfeilrichtung die Drehrichtung des Fahrzeugluftreifens im auf ein Fahrzeug montierten Betriebszustand bei Vorwärtsfahrt angibt.

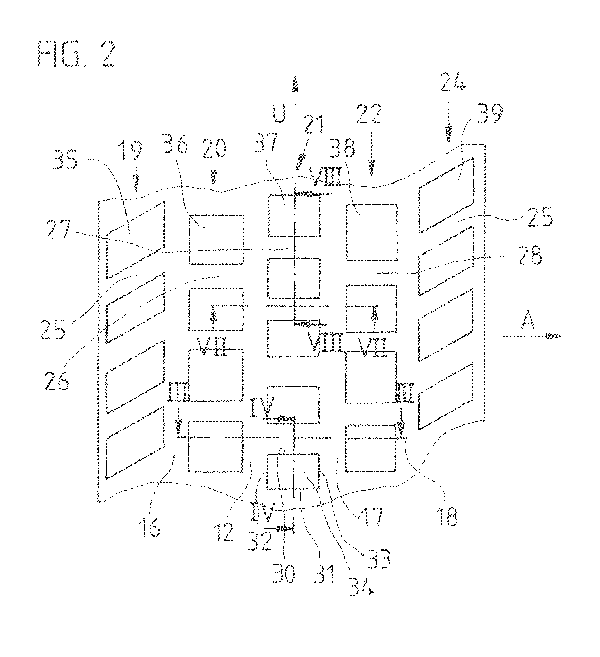

In den Figuren 1 und 2 ist zu erkennen, dass der Laufstreifen 1 mit einem Reifenprofil ausgebildet ist, welches in axialer Richtung A ausgehend von der linken Reifenschulter bis zur rechten Reifenschulter hintereinander angeordnet mit einer in Umfangsrichtung U ausgerichteten Profilblockreihe 19, die in den linken Schulterbereich reicht, mit einer in Umfangsrichtung U ausgerichteten Profilblockreihe 20, mit einer zentralen in Umfangsrichtung U ausgerichteten Profilblockreihe 21, mit einer in Umfangsrichtung U ausgerichteten Profilblockreihe 22 und mit einer in Umfangsrichtung U ausgerichteten Profilblockreihe 24, die in den rechten Schulterbereich reicht, ausgebildet ist. Die Profilblockreihe 19 ist aus einer Vielzahl von in Umfangsrichtung U des Reifens hintereinander angeordneten Profilblockelementen 35 bekannter Art ausgebildet, die jeweils durch eine Querrille 25 bekannter Art voneinander getrennt sind. Die Profilblockreihe 20 ist aus einer Vielzahl von in Umfangsrichtung U des Reifens hintereinander angeordneten Profilblockelementen 36 bekannter Art ausgebildet, die jeweils voneinander durch eine Querrille 26 bekannter Art getrennt sind. Die Profilblockreihe 21 ist aus einer Vielzahl von in Umfangsrichtung U hintereinander angeordneten Profilblockelementen 37 bekannter Art ausgebildet, die jeweils voneinander durch eine Querrille 27 bekannter Art getrennt sind. Die Profilblockreihe 22 ist von einer Vielzahl von in Umfangsrichtung U hintereinander angeordneten Profilblockelementen 38 bekannter Art ausgebildet, die jeweils voneinander durch eine Querrille 28 bekannter Art getrennt sind. Die Profilblockreihe 24 ist aus einer Vielzahl von in Umfangsrichtung U hintereinander angeordneten Profilblockelementen 39 bekannter Art ausgebildet, die jeweils durch eine Querrille 29 bekannter Art voneinander getrennt sind. Die Profilblockreihen 19 und 20 sind in axialer Richtung A des Fahrzeugluftreifens durch eine des Reifens erstreckt, voneinander getrennt. Die Profilblockreihen 20 und 21 sind in in Umfangsrichtung U verlaufende Umfangsrille 16, die sich über den gesamten Umfang axialer Richtung A des Fahrzeugluftreifens durch eine in Umfangsrichtung U des Reifens verlaufende und sich über den gesamten Umfang erstreckende Umfangsrille 12 bekannter Art voneinander getrennt. Die Profilblockreihen 21 und 22 sind in axialer Richtung A des Reifens durch eine in Umfangsrichtung U des Reifens verlaufende und über den gesamten Umfang des Reifens erstreckte Umfangsrille 17 bekannter Art voneinander getrennt. Die Profilblockreihe 22 und die Profilblockreihe 24 sind in axialer Richtung A durch eine in Umfangsrichtung U des Reifens verlaufende und über den gesamten Umfang des Reifens erstreckte Umfangsrille 18 bekannter Art von einander getrennt.

Im Folgenden wird die erfindungsgemäße Ausbildung der Profilblockflanken am Beispiel eines Profilblockelements 37 der Profilblockreihe 21 anhand mehrerer Ausführungsbeispiele erläutert.

Die Profilblockelemente 37 sind jeweils seitlich in axialer Richtung zu den Umfangsrillen 12 bzw. 17 mit seitlichen Profilblockflanken 33 bzw. 32 ausgebildet, an der in die Umfangsrichtung U des Fahrzeugluftreifens bei Vorwärtsfahrt des Fahrzeuges mit montiertem Fahrzeugluftreifen mit einer das Profilblockelement nach vom begrenzenden vorderen Profilblockelementflanke 30 und mit einer das Profilblockelement nach hinten begrenzenden Profilblockelementflanke 31 ausgebildet. Die beiden Profilblockelementflanken 30 und 31 begrenzen das Profilblockelement 37 jeweils zu einer Querrille 27. Die Profilblockelementflanken 30, 31, 32, 33 erstrecken sich dabei jeweils radial aus dem Rillengrund der zugeordneten Rille 27,27, 17, 12 nach außen bis zu der das Profilblockelement nach radial außen hin begrenzenden Kontaktfläche 34, mit der das Profilblockelement beim Durchlaufen der Aufstandsfläche in Reibkontakt zur jeweiligen Straßenoberfläche steht.

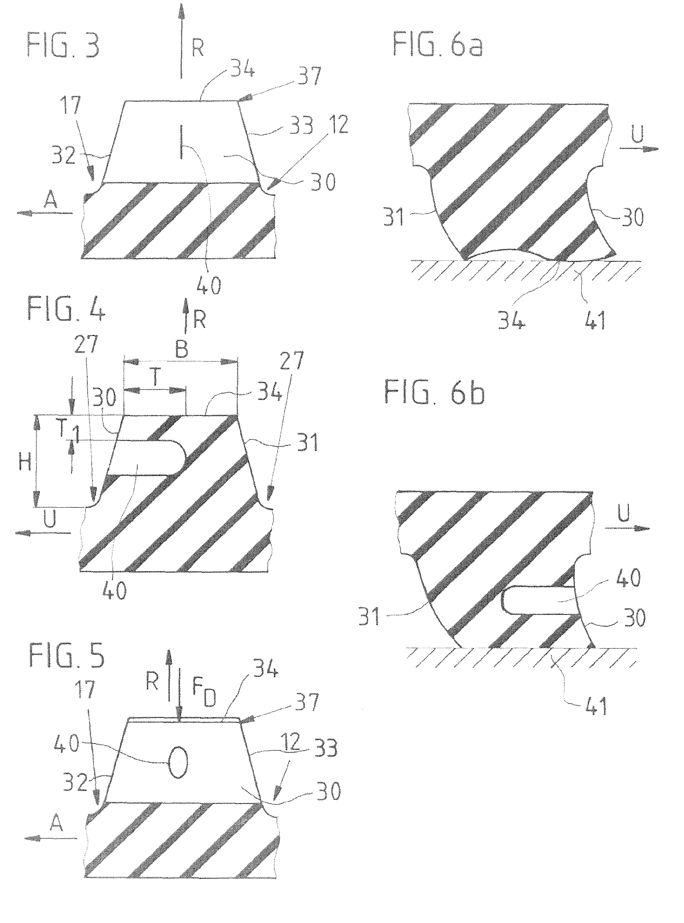

Im Ausführungsbeispiel der Figuren 3 bis 4 ist in der vorderen Profilblockelementflanke 30 in axialer Richtung mittig ein radialer Feineinschnitt 40 ausgebildet, der nach radial innen oberhalb des Rillengrundes endet und nach radial außen in einer radialen Position radial innerhalb der Kontaktfläche 34 endet. Der Feineinschnitt 40 ist in der Profilflanke 30 vollständig und geschlossen von Gummimaterial umhüllt. Die Tiefe T des Feineinschnitts 4, welche die Tiefenerstreckung des Schnitts in das Profilblockelement 37 angibt, ist beispielsweise so gewählt, dass sie 1/3 bis 2/3 der Gesamterstreckung B des Profilblockelements 37 in Umfangsrichtung in Position des Feineinschnitts 40 in der Profilelementflanke 30 beträgt.

In Fig. 5 ist zu erkennen, dass die Einwirkung von radialer Druckkraft F_{D} im Bereich der Profilblockelementflanke 30 zu einer radialen Verkürzung des Feineinschnitts unter axialer Öffnung des Feineinschnitts 14 und hierdurch zu einer radialen Verkürzung der Profilblockelementflanke 30 führt.

In Fig. 6a ist dargestellt, wie bei herkömmlichen Reifen ein Profilblockelement, das beim Bremsen eines mit dem Fahrzeugluftreifen bestückten Fahrzeuges aus Vorwärtsfahrt unter Deformation des Profilblockelements 37 ohne zusätzlichen radialen Längenausgleich der vorderen oder hinteren Profilblockelementflanke 30 oder 31 durch wellenartige Aufwerfungen der Kontaktoberfläche 34 auftreten. Der Kontakt zur Straßenoberfläche 41 ist hierdurch reduziert.

Fig. 6b zeigt das Profilblockelement 37 der Figuren 3 bis 5, bei dem beim Bremsen des Fahrzeugs aus der Vorwärtsfahrt durch Öffnen des radial erstreckten Feinschnitts 40 eine radiale Verkürzung der vorderen Profilblockelementflanke 30 erfolgt. Die Aufwerfungen der Kontaktfläche 34 sind reduziert. Der Kontakt zur Straßenoberfläche 41 ist vergleichmäßigt.

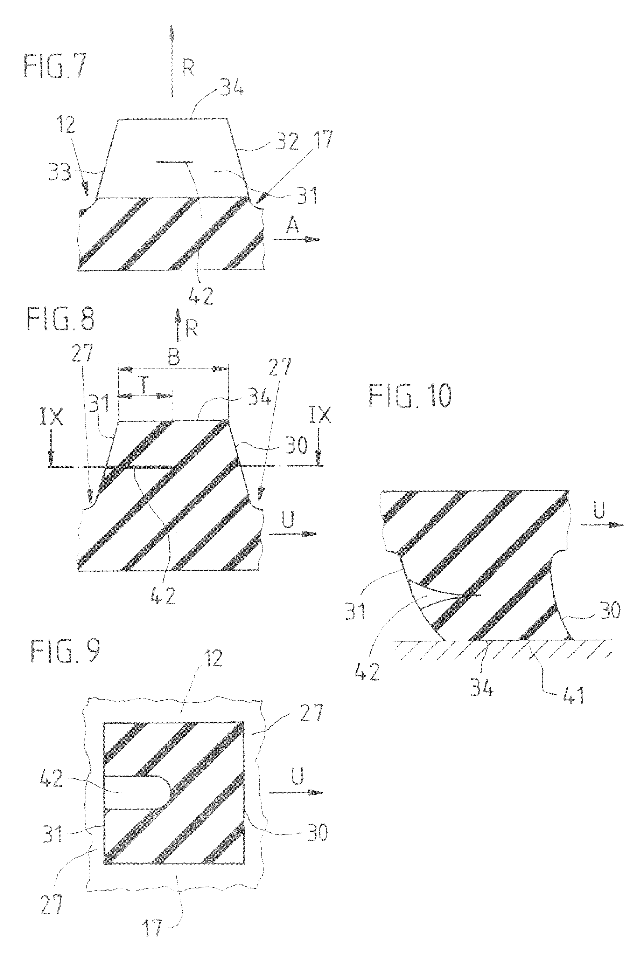

Die Figuren 7 bis 10 zeigen ein Ausführungsbeispiel, bei dem in der beim Drehen des Fahrzeugluftreifens bei Vorwärtsfahrt des Fahrzeugs an der ein Profilblockelement 37 in Umfangsrichtung U nach hinten begrenzenden Profilblockelementflanke 31 ein quer zur radialen Richtung verlaufender Feineinschnitt 42 ausgebildet ist, der sich nach beiden axialen Seiten erstreckt und noch innerhalb der das Profilblockelement seitlich begrenzden Profilblockflanken 32, 33 endet. Der Feineinschnitt 42 ist somit in der Profilblockelementflanke 31 geschlossen vom Gummimaterial umgeben. Hinsichtlich seiner Tiefenerstreckung T des Feineinschnitts 42 gilt das zum Feineinschnitt 41 des Ausführungsbeispiels der Figuren 3 bis 6 gesagte. Wie in Fig. 10 dargestellt ist, wird beim Bremsen das Fahrzeugs aus der Vorwärtsfahrt die Profilblockelementflanke 31 unter radialer Aufspreizung des Feineinschnitts 42 radial gelängt. Die Kontaktfläche 34 ist vergleichmäßigt eben und der Reibkontakt zur Straßenoberfläche 41 vergleichmäßigt.

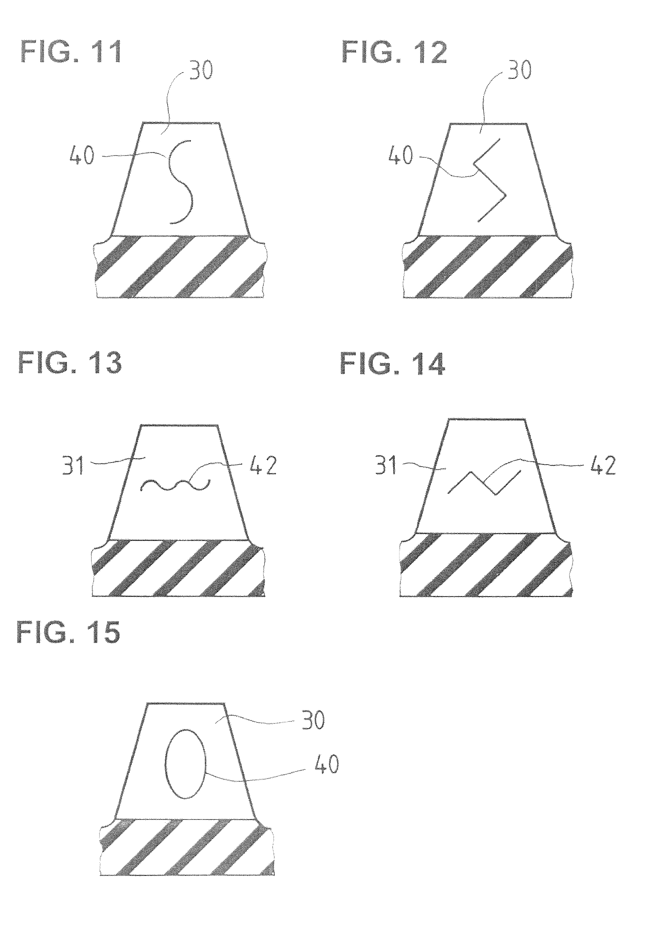

Die Figuren 11 und 12 zeigen alternative Ausführungsformen des Feineinschnitts von Fig.3 , wobei der Feineinschnitt 40 von Fig. 11 wellenförmig und der Feineinschnitt 40 von Fig. 12 gezackt ausgebildet ist.

Die Figuren 13 und 14 zeigen entsprechend alternative Ausführungsformen des Feineinschnitts 42 von Fig. 7, wobei der Feineinschnitt 42 gemäß Fig. 13 wellenförmig und der Feineinschnitt 42 von Fig. 14 gezackt ausgebildet ist.

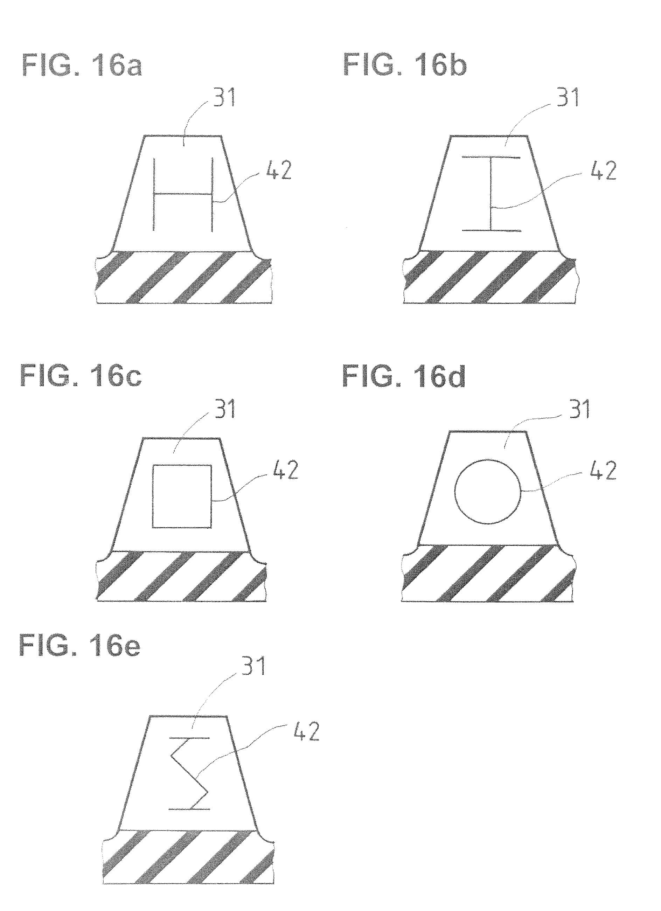

Die Figuren 15, 16a, 16b, 16c, 16d und 16e zeigen weitere alternative Ausführungsformen der Feineinschnitte, welche sowohl Abschnittsbereiche haben, die in radialer Richtung verlaufen als auch Abschnittsbereiche, die quer zur radialen Richtung verlaufen. Fig.15 zeigt einen Feineinschnitt mit ovalem oder elliptischem Verlauf, wobei die Haupterstreckungsrichtungen in die radiale Richtung und in Richtung quer zur Radialen ausgerichtet ist. Fig. 16a und Fig. 16b zeigen H-förmige Feineinschnitte. Fig.16c zeigt einen quadratischen Feineinschnitt, Fig16d einen kreiskörmigen und Fig. 16e einen zackenförmigen mit quer zur radialen Richtung verlaufenden Abschlüssen. Diese Ausführungsformen können - auch wenn jeweils nur als Feineinschnitt 40 an der vorderen Profilblockelementflanke 30 oder als Feineinschnitt 42 an der hinteren Profilblockelementflanke 31 dargestellt - jeweils sowohl als Feineinschnitt 40 in der vorderen Profilblockelementflanke 30 - wie im Ausführungsbeispiel von Fig. 3 dargestellt - oder als Feineinschnitt 42 in der hinteren Profilblockelementflanke 31 - wie in Fig. 7 dargestellt - eingesetzt werden. Die in radialer Richtung verlaufende Feineinschnittskomponente ermöglicht ein Öffnen dieser Feineinschnittskomponente quer zur radialen Richtung bei radialer Druckbelastung der Profilblockflanke, wobei die quer zur radialen verlaufende Feineinschnittskomponente geschlossen bleibt. Dieses ermöglicht den Einsatz an der vorderen Profilblockelementflanke 30, wie es in Fig. 3,4,5 und 6b gezeigt ist. Die quer zur Radialen verlaufende Feineinschnittskomponente ermöglicht ein radiales Öffnen dieses quer zur Radialen verlaufenden Feineinschnittskomponentenverlaufs bei radialer Zugbelastung, wobei die in radiale Richtung verlaufende Feineinschnittskomponenten geschlossen bleiben. Dies ermöglicht den Einsatz dieser Feineinschnitte als Feineinschnitt 41 in der hinteren Profilblockelementflanke 32, wie es in Fig. 7 bis 10 dargestellt ist.

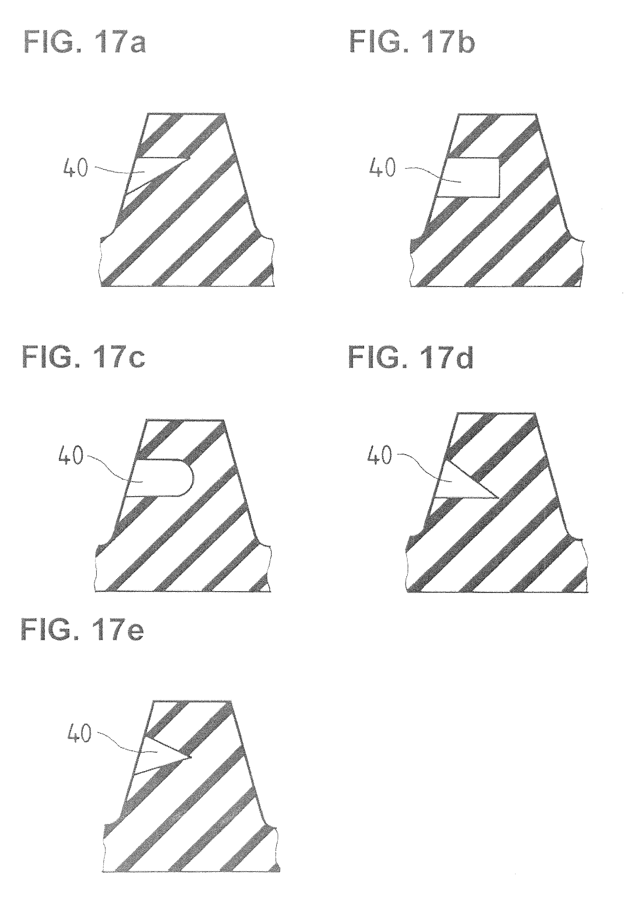

Die Figuren 17a, 17b, 17c, 17d und 17e zeigen am Beispiel des in Fig. 3 dargestellten radialen Feineinschnitts 30 unterschiedliche Alternativen des Konturverlaufs des Schnitts im Inneren des Profilblockelements. Der Konturverlauf des Schnitts kann dabei beispielsweise - wie in Fig. 17b dargestellt - an seinem inneren Ende eckig oder - wie in Fig. 17c dargestellt - abgerundet ausgebildet werden. Der Querschnitt kann - wie in Fig. 17b dargestellt - rechteckig oder - wie in den Figuren 17a, 17d und 17e dargestellt - dreieckig ausgebildet sein. Die dreieckige Querschnittskontur des Schlitzes kann - wie in Fig. 17e dargestellt - als gleichwinkliges Dreieck oder - wie in den Figuren 17a und 17d dargestellt - als rechtwinkliges Dreieck ausgebildet sein.

Auch wenn dieser Konturverlauf des Schlitzes in den Figuren 17a bis 17e im Innern der Profilblockelemente anhand des in Fig. 3 dargestellten Feineinschnitts 40 gezeigt ist, sind auch die Feineinschnitte 42 von Fig. 7 in ihrem Konturverlauf im Profilinnern in analoger Weise ausbildbar. Ebenso sind die in den anderen Ausführungsbeispielen beschriebenen Feineinschnitte mit unterschiedlichen Komponenten in radialer Richtung und in Richtung quer zur radialen Richtung in ihren Komponenten in ihrem Konturverlauf im Profilblockinnern analog ausbildbar.

Alle oben genannten Ausführungsbeispiele wurden am Beispiel eines Profilblockelements erläutert, das zur Verbesserung der Reibkontakts beim Bremsen aus Vorwärtsfahrt vergleichmäßigt werden.

Zur Verbesserung der Vergleichmäßigung des Reibkontakts bei Vorwärtsbeschleunigung und somit zur Verbesserung der Traktion ist es möglich, Profilblockelemente analog den oben beschriebenen Ausführungsbeispielen auszubilden, wobei dann jedoch die in Umfangsrichtung U des montierten Fahrzeugluftreifens bei Vorwärtsfahrt das Profilblockelement nach vom begrenzende Profilblockelementflanke 30 mit derartigen Feineinschnitten versehen werden, wie sie bei o.g. Ausführungsbeispielen, an den die Profilblockelemente an ihrer hinteren Profilblockelementflanke 31 als Feineinschnitte 42 ausgebildet beschrieben sind. Ebenso ist es analog hierzu möglich, die in Umfangsrichtung U des montierten Fahrzeugluftreifens bei Vorwärtsfahrt das Profilblockelement nach hinten begrenzende Profilblockelementflanke 31 mit Feineinschnitten 40 auszubilden, wie sie an den oben beschriebenen Ausführungsbeispielen für die vorderen Profilblockelementflanken 30 dargestellt und beschrieben worden sind. Auf diese Weise sind in diesen Ausführungsbeispielen die Profilblockelemente entweder an ihrer hinteren Profilblockelementflanke 31 mit radialen Feineinschnitten 40 oder mit Feineinschnitten 40 mit radialer Komponente ausgebildet, die bei Beschleunigung des Fahrzeugluftreifens in Vorwärtsfahrtrichtung des Fahrzeugs bei Berührkontakt der Kontaktfläche 34 mit einer Straßenoberfläche 41 aufgrund von radialen Druckkräften unter Öffnung des Feineinschnitts 40 quer zur radialen Richtung eine Verkürzung der hinteren Profilblockelementflanke 31 bewirkt, und/oder an der vorderen Profilblockelementflanke 30 mit Feineinschnitten 42 mit Verlauf quer zur radialen Richtung oder mit Feineinschnitten 42 mit Feineinschnittskomponenten mit Verlauf quer zur radialen Richtung ausgebildet, die bei Beschleunigung des Fahrzeugluftreifens in Vorwärtsfahrtrichtung des Fahrzeugs bei Berührkontakt der Kontaktfläche 34 mit einer Straßenoberfläche 41 aufgrund von radialen Zugkräften ein Öffnen des Feineinschnitts in radialer Richtung und somit eine Längung der vorderen Profilblockelementflanke 30 bewirkt, wodurch ein vergleichmäßigter Reibkontakt zwischen Kontaktfläche 34 und Straßenoberfläche 41 erzielt wird.

Durch Ausbildung sowohl der vorderen 30 als auch der hinteren Profilblockelementflanke 31 jeweils mit Feineinschnitten, die sowohl radiale Komponenten als auch quer zur radialen ausgerichtete Komponenten ihres Schnittverlaufs aufweisen - wie sie beispielsweise in den Fig. 15 und Fig. 16a,b,c,d,e dargestellt sind - kann sowohl beim Bremsen aus Vorwärtsfahrt als auch beim Beschleunigen bei Vorwärtsfahrt sowie beim Bremsen aus Rückwärtsfahrt als auch beim Beschleunigen bei Rückwärtsfahrt ein vergleichmäßigter Reibkontakt zwischen Kontaktfläche 34 und Straßenoberfläche 41 erzielt werden.

### Bezugszeichenliste

### (Teil der Beschreibung)

- 1: Laufstreifen
- 2: Kern
- 3: Wulstverstärker
- 4: Kemprofil
- 5: Homprofil
- 6: Innenschicht
- 7: Seitenstreifen
- 8: Karkassenlage
- 9: Karkassenlage
- 10: Schulterstreifen
- 11: Gürtellage
- 12: Umfangsrille
- 13 14 15: Gürtellage
- 16: Umfangsrille
- 17: Umfangsrille
- 18: Umfangsrille
- 19: Profilblockreihe
- 20: Profilblockreihe
- 21: Profilblockreihe
- 22: Profilblockreihe
- 23: Wulststreifen
- 24: Profilblockelement
- 25: Querrille
- 26: Querrille
- 27: Querrille
- 28: Querrille
- 29: Querrille
- 30: Vordere Profilflanke
- 31: Hintere Profilflanke
- 32: Seitliche Profilflanke
- 33: Seitliche Profilflanke
- 34: Kontaktfläche
- 35: Profilblockelement
- 36: Profilblockelement
- 37: Profilblockelement
- 38: Profilblockelement
- 39: Profilblockelement
- 40: Feineinschnitt
- 41: Straßenoberfläche
- 42 43: Feineinschnitt

## Patentansprüche

1. Fahrzeugluftreifen mit einem Laufflächenprofil mit von durch Profilrillen seitlich begrenzten Profilblockelementen (24),
wobei die Profilblockelemente (24) nach radial außen durch eine Kontaktfläche (34) zur Herstellung des Reibkontaktes zur Straßenoberfläche und seitlich mit Profilelementflanken (30,31,32,33) bildenden Oberflächen begrenzt sind, die sich jeweils aus dem Rillengrund der begrenzenden Profilrille radial nach außen bis zur Kontaktfläche (34) erstrecken,
**dadurch gekennzeichnet,**
**dass** in wenigstens einer eine Profilelementflanke (30,31,32,33) bildenden Oberfläche ein Feineinschnitt (40,42) ausgebildet ist, der in der die Profilelementflanke (30,31,32,33) bildenden Oberflächen vollständig geschlossen mit Gummimaterial umhüllt ist, so dass in Abhängkeit von in radialer Richtung wirkenden Zug-und/oder Druckspannungen in der die Profilelementflanke (30,31,32,33) bildenden Oberfläche die radiale Erstreckung der Profilelementflanke (30,31,32,33) unter Öffnen und/oder Schließen des Feineinschnitts (40,42) veränderbar ist.

2. Fahrzeugluftreifen gemäß den Merkmalen von Anspruch 1,
wobei der Feineinschnitt (40,42) in einer das Profilelement in Umfangsrichtung des Fahrzeugluftreifens begrenzenden Profilelementflanke (30,31) ausgebildet ist.

3. Fahrzeugluftreifen gemäß den Merkmalen von Anspruch 2,
wobei der Feineinschnitt (40,42) im Betriebszustand des montierten Fahrzeugluftreifens in der in Umlaufrichtung des Fahrzeugluftreifens bei Vorwärtsfahrt des Fahrzeugs vorderen das Profilelement in Umfangsrichtung des Fahrzeugluftreifens begrenzenden Profilelementflanke (30) ausgebildet ist.

4. Fahrzeugluftreifen gemäß den Merkmalen von Anspruch 2,
wobei der Feineinschnitt (40,42) im Betriebszustand des montierten Fahrzeugluftreifens in der in Umlaufrichtung des Fahrzeugluftreifens bei Vorwärtsfahrt des Fahrzeugs rückwärtigen das Profilelement in Umfangsrichtung des Fahrzeugluftreifens begrenzenden Profilelementflanke (31) ausgebildet ist.

5. Fahrzeugluftreifen gemäß den Merkmalen von einem oder mehreren der Ansprüche 1 bis 4,
wobei der Verlauf der Haupstschnittrichtung des Feineinschnitts (40,42) in der die Profilelementflanke (30,31) bildenden Oberfläche mit seiner größten Erstreckungskomponente - insbesondere vollständig - in radialer Richtung ausgerichtet ist.

6. Fahrzeugluftreifen gemäß den Merkmalen von einem oder mehreren der Ansprüche 1 bis 4,
wobei der Verlauf der Haupstschnittlichtung des Feineinschnitts (40,42) in der die Profilelementflanke bildenden Oberfläche mit seiner größten Erstreckungskomponente - insbesondere vollständig - senkrecht zur radialen Richtung ausgerichtet ist.
